Europäisches Patentamt

European Patent Office

Office européen des brevets

(19)

(11) Veröffentlichungsnummer: **0 305 010**
**A2**

(12) **EUROPÄISCHE PATENTANMELDUNG**

(21) Anmeldenummer: **88201800.5**

(22) Anmeldetag: **24.08.88**

(51) Int. Cl.⁴: **G01T 1/29**

(30) Priorität: **28.08.87 DE 3728750**

(43) Veröffentlichungstag der Anmeldung:
**01.03.89 Patentblatt 89/09**

(84) Benannte Vertragsstaaten:
**DE FR GB NL**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB NL**

(72) Erfinder: **Schiebel, Ulrich, Dr.**
**Zehntweg 60**
**D-5100 Aachen(DE)**
Erfinder: **Hillen, Walter, Dr.**
**Binsenweg 2**
**D-5100 Aachen(DE)**

(74) Vertreter: **Hartmann, Heinrich, Dipl.-Ing. et al**
**Philips Patentverwaltung GmbH**
**Wendenstrasse 35 Postfach 10 51 49**
**D-2000 Hamburg 1(DE)**

(54) **Vorrichtung zum Auslesen eines Speicherphosphor-Aufzeichnungsträgers.**

(57) Die Erfindung betrifft eine Vorrichtung zum Auslesen eines Speicherphosphor-Aufzeichnungsträgers, bei der die Lichtquelle auf der einen und eine Fotodetektoranordnung auf der anderen Seite angeordnet ist. Die Lichtquelle bestrahlt eine aus einer Vielzahl von Bildpunkten bestehende Teilfläche des Aufzeichnungsträgers und die Fotodetektoranordnung besteht aus einer CCD-Bildaufnehmeranordnung, die derart angeordnet ist, daß die Ladungen in den Zellen des CCD-Bildaufnehmers in der gleichen Richtung und mit der gleichen Geschwindigkeit transportiert werden, mit der sich die von der Lichtquelle beleuchtete Teilfläche über den Aufzeichnungsträger bewegt.

Fig.1

# Vorrichtung zum Auslesen eines Speicherphosphor-Aufzeichnungsträgers

Die Erfindung betrifft eine Vorrichtung zum Auslesen eines Speicherphosphor-Aufzeichnungsträgers mit einer auf der einen Seite des Aufzeichnungsträgers angeordneten Lichtquelle zur optischen Stimulation des Speicherphosphors, einer auf der anderen Seite des Aufzeichnungsträgers befindlichen Fotodetektoranordnung zum Umsetzen des durch die Stimulation erzeugten Fluoreszenzlichtes in ein elektrisches Signal und mit einer Antriebseinrichtung zur Erzeugung einer Relativverschiebung zwischen dem Aufzeichnungsträger einerseits und der Lichtquelle sowie der Fotodetektoranordnung andererseits.

Eine solche Vorrichtung ist aus der EP-OS 01 67 747 bekannt. Die Lichtquelle wird dabei durch eine Zeile von beispielsweise Licht emittierenden Dioden gebildet, während die Detektoranordnung aus entsprechend angeordneten Fotodioden besteht. Die Licht emittierenden Dioden werden nacheinander eingeschaltet, so daß die Fotodioden nacheinander das dadurch Punkt für Punkt erzeugte Fluoreszenzlicht in ein elektrisches Signal umsetzen. Um den gesamten Aufzeichnungsträger zu erfassen, wird die Lichtquelle und die Fotodetektoranordnung relativ zu dem Aufzeichnungsträger verschoben und zwar zunächst in einer ersten, zur Zeilenrichtung senkrechten Richtung und anschließend in einer zweiten, dazu senkrechten Richtung. Da die Auslesung sequentiell erfolgt, ergeben sich relativ lange Auslesezeiten.

Das gleiche gilt für Vorrichtungen, wie sie aus der EP-OS 123 942 bekannt sind, wobei das Licht von einem Laser geliefert wird, dessen Lichtstrahl über einen ablenkbaren Spiegel auf den Aufzeichnungsträger gerichtet wird, und das Fluoreszenzlicht über eine Lichtleiteranordnung einem Fotodetektor zugeführt wird. Auch hier ergeben sich relativ lange Zeiten zum Auslesen des Bildes, nicht nur wegen der sequentiellen Abtastung, sondern auch wegen der begrenzten Laserleistung. Bei den üblichen, für diese Anwendungszwecke benutzten Helium-Neon-Lasern, die eine Laserleistung von ca. 30 mW aufweisen, beträgt die Auslesezeit 1 min; für eine Auslesezeit von 10 sec würden - bei gleichem Signal-Rausch-Verhältnis - ca. 200 mW benötigt, was mit derartigen Lasern kaum realisierbar ist.

Es ist Aufgabe der Erfindung, eine Vorrichtung der eingangs genannten Art so auszugestalten, daß die Zeit für das Auslesen des Speicherphosphor-Aufzeichnungsträgers wesentlich reduziert werden kann. Diese Aufgabe wird erfindungsgemäß dadurch gelöst, daß die Lichtquelle eine aus einer Vielzahl von Bildpunkten bestehende Teilfläche bestrahlt und daß die Fotodetektoranordnung eine die belichtete Teilfläche erfassende CCD-Bildaufnehmeranordnung enthält, die derart angeordnet und betrieben ist, daß die Ladungen in den Zellen des CCD-Bildaufnehmers in der gleichen Richtung und mit der gleichen Geschwindigkeit transportiert werden, mit der sich die von der Lichtquelle beleuchtete Teilfläche auf dem Aufzeichnungsträger verschiebt.

Während bei den bekannten Vorrichtungen also die Bildpunkte sequentiell bestrahlt bzw. ausgelesen werden, erfolgt die Bestrahlung und das Auslesen der von der Teilfläche umfassten Bildpunkte gleichzeitig. Wegen der Relativverschiebung zwischen dem Aufzeichnungsträger und der Lichtquelle sowie der Fotodetektoranordnung wandert die bestrahlte und ausgelesene Teilfläche über den Aufzeichnungsträger. Um dabei ein genügend großes Signal-Rausch-Verhältnis zu erhalten, werden Ladungen in den Zellen des CCD-Bildaufnehmers, der das durch die Stimulation entstehende Fluoreszenzbild in ein elektrisches Signal umsetzt, in der angegebenen Weise transportiert, so daß die von einem Bildpunkt während seiner Stimulation ausgehende Bildinformation integriert wird.

Das durch die vorgegebene Empfindlichkeit der CCD-Bildaufnehmeranordnung begrenzte Signal-Rausch-Verhältnis kann in weiterer Ausgestaltung der Erfindung noch dadurch weiter verbessert werden, daß die Detektoranordnung einen zwischen dem Aufzeichnungsträger und dem CCD-Bildaufnehmer angeordneten Bildverstärker umfaßt, der das auf dem Speicherphosphor-Aufzeichnungsträger erzeugte Fluoreszenzbild auf dem CCD-Bildaufnehmer abbildet. Der Bildverstärker vergrößert in diesem Fall die Leuchtdichte des Fluoreszenzbildes bevor es vom Bildaufnehmer in ein elektrisches Signal umgesetzt wird.

Von besonderem Vorteil ist es, wenn die Relativverschiebung zwischen dem Aufzeichnungsträger einerseits und der Lichtquelle sowie der Fotodetektoranordnung andererseits nur in einer Richtung erfolgen muß. Dies setzt aber voraus, daß die Fotodetektoranordnung das Fluoreszenzbild auf der gesamten Breite (oder Länge) des Aufzeichnungsträgers erfassen kann. Die Abmessungen eines Aufzeichnungsträgers liegen in der Praxis jedoch bei rund 40 cm. CCD-Bildaufnehmer mit derartigen Abmessungen sind derzeit aber noch nicht herstellbar. Um trotzdem einen breiteren Bereich des Fluoreszenzbildes erfassen zu können, sieht eine Weiterbildung der Erfindung vor, daß die CCD-Bildaufnehmeranordnung aus mehreren CCD-Bildaufnehmern besteht, die nebeneinander und senkrecht zur Verschiebungsrichtung angeordnet sind.

In weiterer Ausgestaltung der Erfindung ist vorgesehen, daß als Lichtquelle eine Niederdruck-Natriumdampf-Entladungslampe dient. Niederdruck-Natriumdampf-Entladungslampen haben eine sehr hohe Strahlungsdichte - gerade in dem 'für die Stimulation von Speicherphosphoren wesentlichen Wellenlängenbereich.

Die Erfindung wird nachstehend anhand der Zeichnungen näher erläutert. Es zeigen

Fig. 1 eine schematische Darstellung der Erfindung,

Fig. 2 einen CCD-Bildaufnehmer und die Ladungsverschiebung in diesem und

Fig. 3 einen Teil der Vorrichtung nach Anspruch 1.

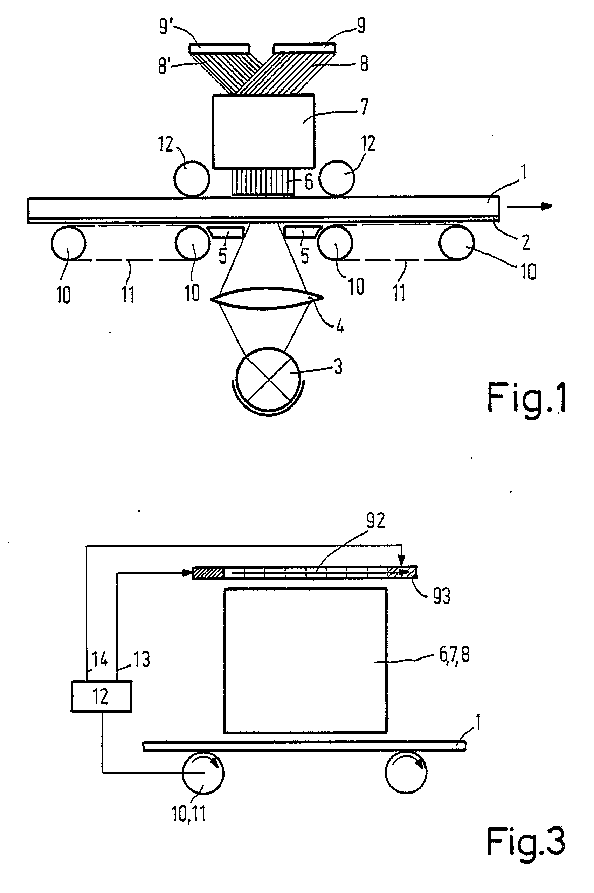

Der Speicherphosphor-Aufzeichnungsträger, dessen Hauptausdehnungsrichtung sich senkrecht zur Zeichenebene der Fig. 1 erstreckt, besteht aus einem transparenten Substrat 2, das mit einem Speicherphosphor 1 beschichtet ist, wie er unter anderem in der US-PS 4 369 367 beschrieben ist. Der Aufzeichnungsträger 1, 2 befindet sich in einer Lesestation, in der er mittels der Transportrollen 10, 12 und der Transportbänder 11, vorzugsweise mit konstanter Geschwindigkeit in Pfeilrichtung transportiert wird. Auf der Seite des Aufzeichnungsträgers, auf der sich das transparente Substrat befindet, ist eine stabförmige Lichtquelle 3 angeordnet, die über eine Zylinderlinse 4 und durch die Öffnung einer Blende 5 hindurch eine Teilfläche des Aufzeichnungsträgers 1, 2 belichtet und dadurch den darauf befindlichen Speicherphosphor stimuliert. Die Lichtquelle 3, die Zylinderlinse 4 und die Blende 5 erstrecken sich mit ihrer Hauptausdehnungsrichtung senkrecht zur Zeichenebene - vorzugsweise über die gesamte Breite des Aufzeichnungsträgers 1, 2. Vorzugsweise wird die Lichtquelle durch eine Niederdruck-Natriumdampf-Entladungslampe gebildet, deren Licht in einem für die Stimulation des Speicherphosphors optimalen Wellenlängenbereich liegt.

Das durch die Stimulation erzeugte Fluoreszenzbild wird mittels einer Fiberobtikplatte 6 auf die Fotokathode eines Bildverstärkers 7 abgebildet, zu welchem Zweck die Fotokathode vorzugsweise direkt auf die Fiberoptikplatte aufgebracht ist. Dabei befindet sich im Strahlengang vor dem Bildverstärker ein nicht näher dargestelltes Filter, das alle Strahlung unterdrückt, deren Wellenlänge nicht der Wellenlänge des Fluoreszenzlichtes entspricht. Das von der Lichtquelle 3 stammende Licht erreicht also nicht den Eingang des Bildverstärkers 7.

Das Ausgangsbild des Bildverstärkers 8 wird mit Hilfe einer Fiberoptik auf den Eingang einer CCD-Bildaufnehmeranordnung übertragen. Da ein CCD-Bildaufnehmer eine integrierte Schaltung mit vergleichsweise kleinen Dimensionen ist, sind in Richtung senkrecht zur Zeichenebene eine Anzahl von Fiberoptiksegmenten 8, 8' mit je einem CCD-Bildaufnehmer 9, 9' vorgesehen. Die einander benachbarten Segmente 8, 8' sind dabei vorzugsweise gegeneinander geneigt, so daß an ihren vom Bildverstärker 7 abgewandten Enden die CCD-Bildaufnehmer 9,9', deren optisch wirksame Flächen stets kleiner sind als ihre Abmessungen, einander nicht berühren können.

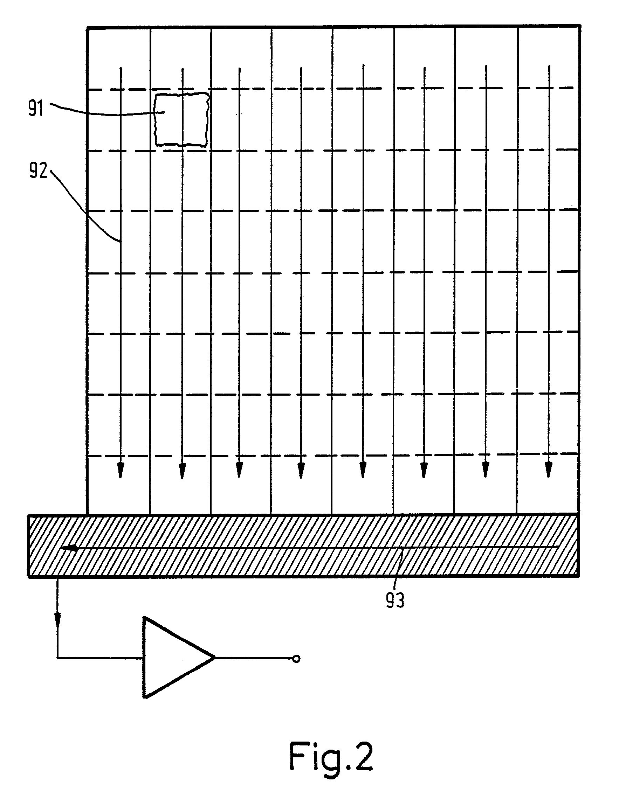

In Fig. 2 ist schematisch ein Bildaufnehmer dargestellt. Er besteht aus einer Vielzahl von Transferkanälen 92, von denen jeder aus einer Anzahl von fotoempfindlichen ladungsgekoppelten Zellen besteht. Diese CCD-Bildaufnehmer sind so auf die Fiberoptiksegmente 8, 8' montiert, daß die Richtung ihrer Kanäle 92 mit der Verschieberichtung des Speicherphosphor-Aufzeichnungsträgers 1, 2 zusammenfällt. Der Auslesetakt für die CCD-Bildaufnehmer ist so gewählt, daß die Ladung von Zelle zu Zelle mit der gleichen Geschwindigkeit durch den Transferkanal bewegt wird, mit der sich die Abbildung eines Punktes auf dem Speicherphosphor-Aufzeichnungsträger 1, 2 infolge der Verschiebung des Aufzeichnungsträgers verschiebt. Durch dieses an sich bekannte Verfahren (vgl. G. G. Jespers et al "Solid State Imaging", Noordhoff-Leyden, 1976, Seiten 659 bis 671) wird erreicht, daß die zu einem bestimmten Zeitpunkt in einer Zelle des CCD-Bildaufnehmers befindliche Ladung nur von dem Fluoreszenzlicht beeinflußt, wird das von einem bestimmten Punkt auf dem Aufzeichnungsträger ausgeht - obwohl die Abbildung dieses Punktes über den CCD-Bildaufnehmer wandert.

Die Ausgänge der Kanäle 92 sind mit je einer Zelle eines Registers 93 gekoppelt, das wie durch die Schraffur angedeutet, nicht belichtet wird, und das seriell auslesbar ist. Die Taktfrequenz für dieses Register muß dabei mindestens um einen Faktor, der der Spaltenzahl eines CCD-Bildaufnehmers entspricht, höher sein als das Taktsignal, das die Ladung innerhalb der einzelnen Kanäle verschiebt. Der auf diese Weise am Ausgang des analogen Registers 93 erzeugte Datenstrom wird in einem Verstärker 94 verstärkt und danach einem Analog-Digital-Wandler zugeführt.

Wie sich aus dem vorhergehenden ergibt, müssen die Verschiebegeschwindigkeit des Aufzeichnungsträgers 1, 2 und der Ladungen in einem Transferkanal 92 identisch sein. In Fig. 3 ist schematisch angedeutet, wie sich dies erreichen läßt. Die Transportrollen 10, 12, deren Umfang beispielsweise 90 mm beträgt, sind mit einem nicht näher dargestellten inkrementalen Drehgeber ausgerüstet, der pro Umdrehung eine feste Anzahl von Impulsen an eine digitale elektronische Schaltung 12 abgibt, beispielsweise 18.000 Impulse. Die Schaltung 12 erzeugt durch geeingete Untersetzung der Drehgeberimpulse am Ausgang 13 die Taktimpulse für die Ladungsverschiebung in den Kanälen 92. Die Zahl der Taktimpulse hängt von der Größe eines Bildelementes, d.h. einer Zelle des CCD-Bildaufnehmers 9 ab. Bei einer Länge der Zelle von 0,1 mm sind pro Umdrehung der Antriebswalze 900 Taktimpulse erforderlich, das durch eine Untersetzung der Drehgeberimpulse um den Faktor 20 erreicht wird. Außerdem erzeugt die Schaltung 12 an ihrem Ausgang 14 (zumindest) soviel Taktimpulse, wie Kanäle 92 vorhanden sind. Bei 100 Kanälen sind also zwischen zwei Taktimpulsen am Ausgang 13 hundert Taktimpulse am Ausgang 14 erforderlich.

Wenn der Speicherphosphor-Aufzeichnungsträger 1, 2 mit einer Geschwindigkeit von 200 mm pro Sekunde verschoben wird, muß die Transportrolle 10 und damit das Transportband 11 eine Umdrehungszahl von 2,22 Umdrehungen pro Sekunde haben. Die Pulsfrequenz am Ausgang 13 ist dann 2 kHz, woraus sich für die Pulsfrequenz am Ausgang 14 ein Wert zwischen 200 und 250 kHz ergibt.

**Ansprüche**

1. Vorrichtung zum Auslesen eines Speicherphosphor-Aufzeichnungsträgers mit einer auf der einen Seite des Aufzeichnungsträgers angeordneten Lichtquelle zur optischen Stimulation des Speicherphosphors, einer auf der anderen Seite des Aufzeichnungsträgers befindlichen Fotodetektoranordnung zum Umsetzen des durch die Stimulation erzeugten Fluoreszenzlichtes in ein elektrisches Signal und mit einer Antriebseinrichtung zur Erzeugung einer Relativverschiebung zwischen dem Aufzeichnungsträger einerseits und der Lichtquelle sowie der Fotodetektoranordnung andererseits, dadurch gekennzeichnet, daß die Lichtquelle (3, 4) eine aus einer Vielzahl von Bildpunkten bestehende Teilfläche bestrahlt und daß die Fotodetektoranordnung (6,...9) eine die belichtete Teilfläche erfassende CCD-Bildaufnehmeranordnung (9, 9') enthält, die derart angeordnet und betrieben ist, daß die Ladungen in den Zellen (91) des CCD-Bildaufnehmers in der gleichen Richtung und mit der gleichen Geschwindigkeit transportiert werden, mit der sich die von der Lichtquelle beleuchtete Teilfläche auf dem Aufzeichnungsträger verschiebt.

2. Vorrichtung nach Anspruch 1, dadurch gekennzeichnet, daß die Detektoranordnung einen zwischen dem Aufzeichnungsträger und dem CCD-Bildaufnehmer angeordneten Bildverstärker (7) umfaßt, der das auf dem Speicherphosphor-Aufzeichnungsträger erzeugte Fluoreszenzbild auf den CCD-Bildaufnehmer (9) abbildet.

3. Vorrichtung nach einem der vorhergehenden Ansprüche, dadurch gekennzeichnet, daß die CCD-Bildaufnehmeranordnung aus mehreren CCD-Bildaufnehmern (9, 9') besteht, die nebeneinander und senkrecht zur Verschiebungsrichtung angeordnet sind.

4. Vorrichtung nach Anspruch 1 bis 3, dadurch gekennzeichnet, daß als Lichtquelle (3) eine Gasentladungslampe dient.

5. Vorrichtung nach Anspruch 4, dadurch gekennzeichnet, daß die Gasentladungslampe eine Na-Niederdruck-Lampe ist.

6. Vorrichtung nach Anspruch 1, dadurch gekennzeichnet, daß die Taktfrequenz für die Bildaufnehmeranordnung und die Antriebseinrichtung miteinander synchronisiert sind.

7. Vorrichtung nach einem der Ansprüche 1 bis 6, dadurch gekennzeichnet, daß zwischen dem Aufzeichnungsträger und der Fotodetektoranordnung ein Filter angeordnet ist, das das Licht der Lichtquelle absorbiert und das Fluoreszenzlicht durchläßt.

Fig.1

Fig.3

Fig.2